# EUROPEAN PATENT APPLICATION

(11) **EP 1 662 816 A1**
(43) Date of publication of application: **31.05.2006**
(21) Application number: 05109919.0
(22) Date of filing: 24.10.2005
(51) Int. Cl.: H04Q 7/22, H04B 1/16

(54) **Apparatus for controlling the state of a multifunctional device**

(30) Priority: 30.11.2004 KR 2004099044
(71) Applicant: Samsung Electronics Co., Ltd., Suwon-si, Gyeonggi-Do (KR)
(72) Inventor: Lee, Kyoung-jae, Gyeonggi-do (KR)
(74) Representative: Read, Matthew Charles

(57) **Abstract**

A method and apparatus for controlling a system state of a multi-functional device or a printer based on the content of a short message provided via a short message service (SMS), and a multi-functional device using the apparatus are provided. The method includes steps for receiving a short message, verifying that the short message is from a subscriber authorized to change a state of the multi-functional device, and then controlling the state of the multi-functional device according to content for changing the state of the multi-functional device, which is included in the short message.

## Description

The present invention relates to apparatus for controlling a multi-functional device or a printer having a facsimile (or fax) function.

With the development of office automation, demand for office automation equipment such as copiers, printers, scanners, and fax machines has rapidly increased. Multiple function office automation equipment has been developed to meet demand. Furthermore, products having multiple document output functions, in which a number of independent office automation devices are integrated, thereby decreasing the financial burden and required installation space, havebecome available. Such products are referred to as multi-functional devices (MFDs). MFDs typically have multiple document output functions, such as a printer function that prints data input from a host computer, a scanner function that reads image documents, a copier function that copies image documents input through scanning, and a fax function that transmits image documents to a remote location through a communication line. MFDs include terminals such as fax machines, scanners, printers and copiers, which usually exist independently and have a host computer interface function to connect the MFD to a host computer.

Recently, MFDs having a short message service (SMS) function have become widely available. For example, Korean Patent Publication No. 2003-93767 discloses an MFD including a fax which has an SMS function and printing a fax image using the MFD including the fax.

However, MFDs having an SMS function simply receive a short message and store it in memory or print it out.

The present invention seeks to provide a method of and apparatus for controlling a multi-functional device.

According to an aspect of the present invention, a method of controlling a state of a multi-functional device using a SMS is provided, comprising the steps of receiving a short message, and controlling the state of the multi-functional device according to content for changing the state of the multi-functional device, which is included in the short message.

Thus, the state of a molti-functional device can be remotely controlled. For example, the multi-functional device can be remotely turned on or off or can be remotely set to forward a fax to a user in their office.

The method may further comprise the step of determining whether the short message satisfies a requirement for changing the state of the multi-functional device.

According to another aspect of the present invention, an apparatus for controlling a state of a multi-functional device using a SMS is provided, comprising a receiving unit for receiving a short message, and a control unit for controlling the state of the multi-functional device according to content for changing the state of the multi-functional device, which is included in the short message.

The apparatus may further comprise a determination unit for determining whether the short message satisfies a requirement for changing the state of the multi-functional device.

According to still another aspect of the present invention, an MFD including an apparatus for controlling a state of a multi-functional device using a SMS is provided.

According to yet another aspect of the present invention there is provided a method of controlling a multi-functional device, the method comprising receiving a short message including an instruction to change the state of the multi-functional device and changing the state of the device according to said instruction.

According to still yet another aspect of the present invention there is provided apparatus for controlling a multi-functional device, the apparatus comprising means for receiving a short message including an instruction and means for changing the state of the multi-functional device according to said instruction. The apparatus may be included in the multi-functional device.

Embodiments of the present invention will now be described by way of example with reference to the arccompanying drawings in which:
Figure 1 is a flowchart of a method of controlling the state of a multi-functional device (MFD) using a short message service (SMS);
Figure 2 is a block diagram of an apparatus for controlling the state of an MFD using a SMS;
Figure 3 is a block diagram of an MFD;
Figure 4 is a flowchart! of a method for controlling the state of an MFD using SMS;
Figure 5 illustrates a screen-displayed message allowing a calling subscriber number to be input;
Figure 6 illustrates a screen-displayed message allowing a secret number to be input;
Figure 7 illustrates content of a displayed message transmitted to change an answer mode into a fax mode;
Figure 8 illustrates content of a displayed message transmitted to set a fax forwarding function;
Figure 9 illustrates content of a displayed message transmitted to register a speed dial number according; and
Figure 10 illustrates content of a displayed message transmitted to turn off the power of an MFD.

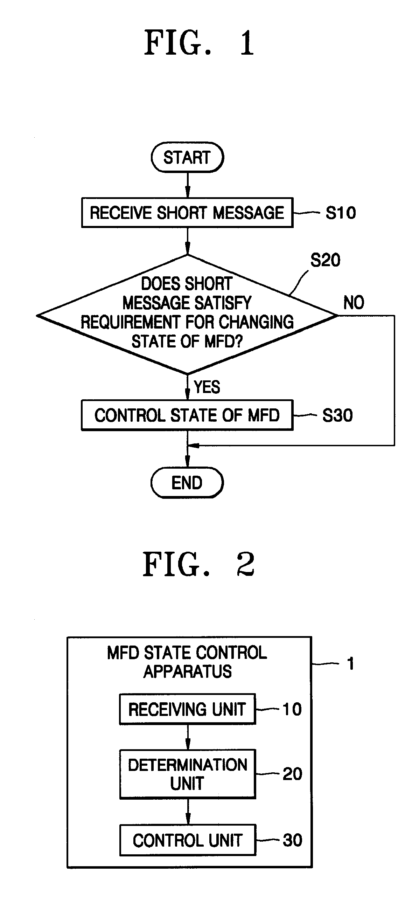

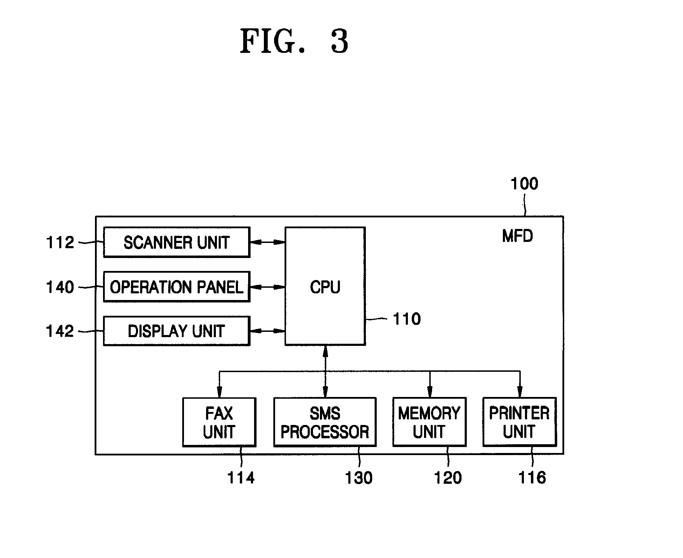

Figure 1 is a flowchart of an embodiment of a method of controlling the state of a multi-functional device (MFD) using a short message service (SMS) according to the present invention. Referring to Figure 1, a short message according to a SMS is received (step S10). It is determined whether the short message satisfies a requirement for changing the state of the MFD (step S20). An exemplary MFD is shown in Figure 3 and described in greater detail later. If it is determined that the short message does not satisfy the requirement, the method ends.

However, if it is determined that the short message satisfies the requirement, the state of the MFD is controlled according to the content of the short message (step S30).

Determining whether the short message satisfies the requirement for changing the state of the MFD may, for example, comprise determining whether a calling subscriber number corresponding to the short message is authorized to change the state of the MFD, and determining that the short message does not satisfy the requirement if it is determined that the calling subscriber number is not authorized. A calling subscriber number that is authorized to change the state of the MFD can be input to and stored in the MFD by a user in advance.

Alternatively or additionally, determining whether the short message satisfies a requirement for changing the state of the MFD may comprise determining whether the short message includes a character and number for changing the state of the MFD, and determining that the short message does not satisfy the requirement if it is determined that the short message does not include the character and number. Preferably, determining whether the short message satisfies a requirement for changing the state of the MFD comprises determining whether the short message begins with a special character for changing the state of the MFD, and further includes a secret number that can be input to and stored in the MFD by a user in advance. In this case, if the short message does not include the special character and the secret number, it is determined that the short message does not satisfy the requirement for changing the state of the MFD at step S20.

Controlling the state of the MFD may comprise controlling the power of the MFD, such as turning the MFD on or off, , when the short message includes instructions to turn the power on or off, respectively. Controlling the state of the MFD may also comprise controlling an answer mode of the MFD, such as switching to a fax mode, when the short message includes instructions to switch the answer mode of the MFD into the fax mode. In addition, controlling the state of the MFD may comprise controlling a fax forwarding function of the MFD to be executed when the short message includes instructions to execute the fax forwarding function of the MFD. Moreover, controlling the state of the MFD may comprise controlling a speed dial number to be registered in the MFD when the short message includes instructions to register the speed dial number in the MFD.

Figure 2 is a block diagram of an apparatus for controlling the state of an MFD using a SMS (hereinafter, referred to as an MFD state control apparatus 1). Referring to Figure 2, the MFD state control apparatus 1 comprises a receiving unit 10, a determination unit 20, and a control unit 30.

The receiving unit 10 receives a short message. The determination unit 20 determines whether the short message satisfies a requirement for changing the state of the MFD. If it is determined that the short message satisfies the requirement for changing the state of the MFD, the control unit 30 controls the state of the MFD according to the content of the short message.

The determination unit 20 may, for example, be configured to determine whether a calling subscriber number corresponding to the short message is authorized to change the state of the MFD, and determine that the short message does not satisfy the requirement if it is determined that the calling subscriber number is not authorized. Here, a calling subscriber number authorized to change the state of the MFD can be input to and stored in the MFD by a user in advance.

Alternatively, the determination unit 20 may be further configured to determine whether the short message includes a character and number for changing the state of the MFD, and determine that the short message does not satisfy the requirement if it is determined that the short message does not include the character and number. As another alternative, the determination unit 20 may be further configured to determine whether the short message begins with a special character for changing the state of the MFD, and further includes a secret number that can be input to and stored in the MFD by a user in advance. In this case, if the short message does not include the special character and the secret number, the determination unit 20 may be configured to determine that the short message does not satisfy the requirement for changing the state of the MFD.

The control unit 30 may, for example, be configured to control the power of the MFD to be turned on or off when the short message includes instructions to turn the power on or off, respectively. The control unit 30 may also be configured to control an answer mode of the MFD to be converted into a fax mode when the short message includes instructions to convert the answer mode of the MFD into the fax mode. In addition, the control unit 30 may be further configured to control a fax forwarding function of the MFD to be executed when the short message includes instructions to execute the fax forwarding function of the MFD. Moreover, the control unit 30 may be further configured to control a speed dial number to be registered in the MFD when the short message includes instructions to register the speed dial number in the MFD.

The MFD state control apparatus 1 illustrated in Figure 2 can be provided separately, or can be included in an MFD. For example, Figure 3 is a block diagram of an MFD 100 according to an embodiment of the present invention, which can include the MFD state control apparatus of Figure 2. The MFD 100 comprises a central processing unit (CPU) 110, a scanner unit 112, a fax unit 114, a printer unit 116, a memory unit 120, an SMS processor 130, an operation panel 140, and a display unit 142.

The CPU 110 controls the MFD 100 according to a predetermined program. The memory unit 120 stores an operating program for the CPU 110, a general control program, and SMS data received through the SMS processor 130. In addition, image data scanned by the scanner unit 112 and fax data input through the fax unit 114, are stored in the memory unit 120. The printer unit 116 prints data stored in the memory unit 120 or data received from a printer driver of a host computer (not shown).

The operation panel 140 comprises a plurality of keys (not shown) and supplies key data generated by pressing a key, to the CPU 110. The operating state of the MFD 100 is displayed on the display unit 142, which is comprised of a liquid crystal display (LCD) or a light emitting diode (LED), according to display data from the CPU 110.

The CPU 110 analyses a received short message to determine whether the short message is for changing the state of the MFD 100, controls the state of the MFD 100 to be changed when the short message satisfies a requirement for changing the state of the MFD 100, and stores the short message in the memory unit 120 when the short message does not satisfy the requirement.

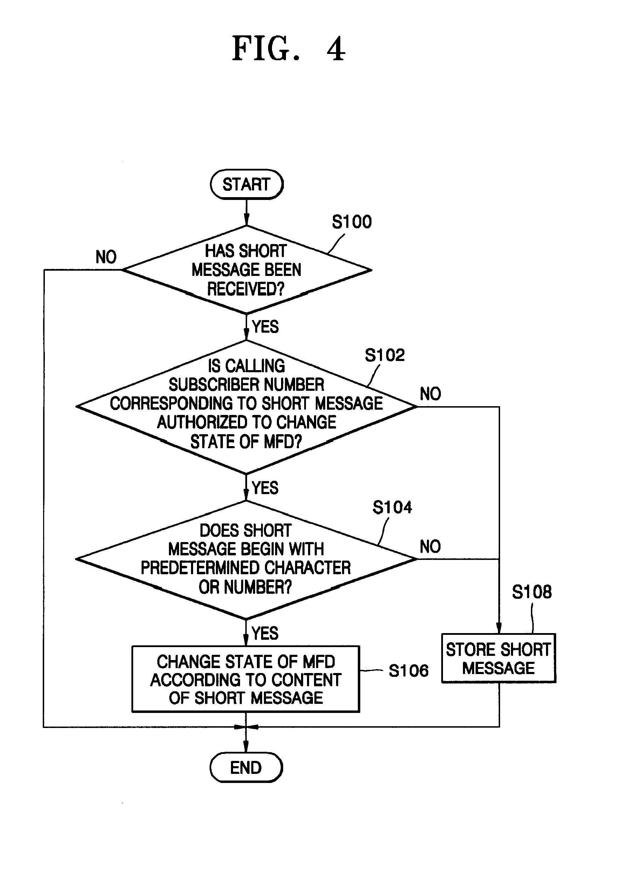

Figure 4 is a flowchart of a method for controlling the state of an MFD using a SMS. Referring to Figure 4, it is determined whether a short message has been received (step S100). If it is determined that a short message has not been received, the method ends.

If it is determined that a short message has been received, it is then determined whether a calling subscriber number corresponding to the received short message is authorized to change the state of the MFD (step S102). If it is determined that the calling subscriber number is not authorized, the short message is determined to be a usual message and is stored in the memory unit 120 (step S108).

If it is determined that the calling subscriber number is authorized, it is determined whether the short message satisfies a requirement for changing the state of the MFD. For example, it is determined whether the short message begins with a predetermined character or number for changing the state of the MFD (step S104). If it is determined that the short message begins with the predetermined character or number, the short message is analysed and the state of the MFD is changed according to the content of the short message (step S106).

If it is determined that the short message does not begin with the predetermined character or number, the short message is determined to be a usual message and is stored in the memory unit 120 (step S108).

As described earlier, if a sender of a short message does not have authority to change the state of an MFD or if the short message does not satisfy a requirement for changing the state of an MFD, the short message does not affect the state of the MFD, and it is determined to be a usual message and is stored in a memory unit.

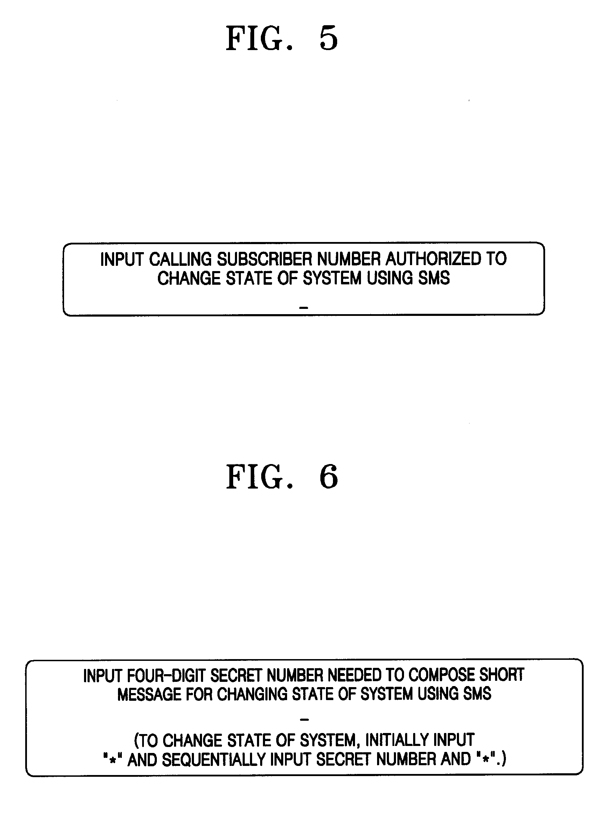

An MFD or a printer with a function that receives a message sent using a SMS can analyse a short message having a predetermined format and change the state of a system. For these operations, a user preferably inputs to the MFD 100 a calling subscriber number that is authorized to change the state of a system, and stores the calling subscriber number in the memory unit 120 in advance. Figure 5 illustrates a screen displayed message on the display unit 142, such as an LCD, of the MFD 100 to allow a user to input a calling subscriber number that is authorized to change the state of a system. The inputting of an authorized calling subscriber number is provided to prevent an unauthorized person from changing the state of the system using a SMS, thereby ensuring security.

In addition, if a secret number is used, the user of the MFD 100 preferably inputs the secret number used to change the state of the system into the MFD 100, and stores the secret number in the memory unit 120 in advance. Figure 6 illustrates a screen displayed message on the LCD of the MFD 100 to allow the user to input the secret number.

In this situation, when the MFD 100 receives a short message, it can be determined whether the short message is for changing the state of the system by verifying the secret number included in the short message. When the secret number is verified, the content of the short message following the secret number is analysed and the state of the system is changed. For example, an input rule can be set to require that a user initially input "*", then input a secret number, and then input "*" when the user composes a short message using a mobile phone in order to indicate that the short message is for changing the state of the system.

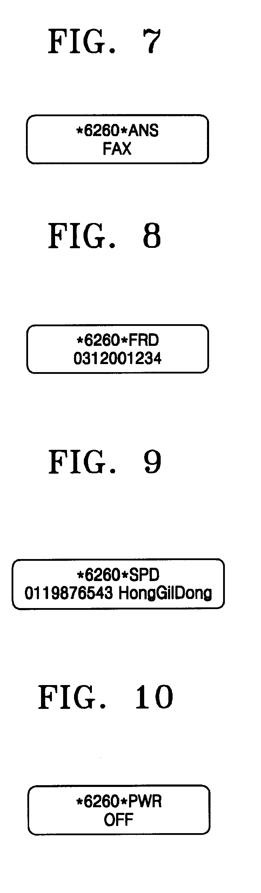

An example of changing the state of a system using a SMS is described in greater detail below with reference to Figures 7 to 10.

Figure 7 illustrates the content of a short message input to a mobile phone by a user to change an answer mode of an MFD into a fax mode. When the user is at a location remote from an MFD and needs to receive a fax in the MFD, which has a telephone function and fax function and has been set to a telephone mode as an answer mode, the user can change the answer mode into the fax mode by transmitting a short message as shown in Figure 7 to the MFD using a SMS. In this example, the user inputs "*", then inputs a secret number "6260", and then inputs "*" in order to indicate that the short message is for changing the state of the system. The user then inputs "ANS FAX" to change the answer mode into the fax mode. In these examples, the secret number 6260 is presented as an example only.

Figure 8 illustrates the content of a short message input to a mobile phone by a user to set a fax forwarding function in an MFD. For example, when an urgent and important fax will be received in the MFD at the user's home and the user wants to receive the fax at the user's office through fax forwarding, the user can set the fax forwarding function and a number of a fax machine at the user's office to which the fax is to be forwarded, in the MFD at home by transmitting a short message as shown in Figure 8 to the MFD at home using a SMS. In this example, the user inputs "*", then inputs a secret number "6260", and then inputs "*" in order to indicate that the short message is for changing the state of the system. The user then inputs "FRD 0312001234" to set the fax forwarding function and a number of a fax machine at the user's office.

Figure 9 illustrates the content of a short message input to a mobile phone by a user to register a new speed dial number in an MFD. The user at a remote location can register a telephone number as a speed dial number in the MFD by transmitting a short message as shown in Figure 9 to the MFD using a SMS. In this example, the user inputs "*", then inputs a secret number "6260", and then inputs "*" in order to indicate that the short message is for changing the state of the system. The user then inputs "SPD 0119876543 HongGilDong" to register a telephone number as a speed dial number in the MFD.

Figure 10 illustrates the content of a short message input to a mobile phone by a user to turn off power to an MFD. The user at a remote location can turn off power to the MFD to reduce power consumption by transmitting a short message shown in Figure 10 to the MFD using a SMS. In this example, the user inputs "*", then inputs a secret number "6260", and then inputs "*" in order to indicate that the short message is for changing the state of the system. The user then inputs "PWR OFF" to turn off power to the MFD.

Thus, the state of an MFD or a printer can be changed at a remote location using a SMS. Accordingly, since power to the MFD can be turned off, power consumption can be reduced. In addition, an urgent fax can be received in a location remote from the MFD through fax forwarding. Moreover, a user can easily input data such as a speed dial number including a character and number into the MFD using a SMS.

## Claims

1. A method of controlling a state of a multi-functional device using a short message service, the method comprising the steps of:
receiving a short message comprising instructions for changing the state of a multi-functional device; and
controlling the state of the multi-functional device according to the instructions for changing the state of the multi-functional device included in the short message.

2. The method of claim 1, further comprising the step of:
determining whether the short message satisfies a requirement for changing the state of the multi-functional device, wherein the controlling of the state is performed when the short message satisfies the requirement.

3. The method of claim 2, wherein the step of determining whether the short message satisfies a requirement comprises the steps of:
determining whether a calling subscriber number corresponding to the short message is authorized to change the state of the multi-functional device; and
determining that the short message does not satisfy the requirement when the calling subscriber number is not authorized.

4. The method of claim 3, further comprising the steps of:
inputting and storing a calling subscriber number that is authorized to change the state of the multi-functional device in the multi-functional device in advance.

5. The method of claim 2, wherein the step of determining whether the short message satisfies a requirement comprises the steps of:
determining whether the short message comprises a character and number for changing the state of the multi-functional device; and
determining that the short message does not satisfy the requirement when the short message does not comprise the character and number.

6. The method of claim 5, wherein the step of determining whether the short message comprises the character and number comprises the step of:
determining whether the short message begins with a special predetermined character for changing the state of the multi-functional device and further comprises a secret number, wherein the secret number can be input to and stored in the multi-functional device in advance.

7. The method of claim 1, wherein the step of controlling the state of the multi-functional device comprises the step of:
controlling the power of the multi-functional device to be turned off when the short message comprises instructions to turn off the power.

8. The method of claim 1, wherein the step of controlling the state of the multi-functional device comprises the step of:
controlling an answer mode of the multi-functional device to be converted into a fax mode when the short message comprises instructions to convert the answer mode of the multi-functional device into the fax mode.

9. The method of claim 1, wherein the step of controlling the state of the multi-functional device comprises the step of:
controlling a fax forwarding function of the multi-functional device to be executed when the short message comprises instructions to execute the fax forwarding function of the multi-functional device.

10. The method of claim 1, wherein the step of controlling the state of the multi-functional device comprises the step of:
controlling a speed dial number to be registered in the multi-functional device when the short message comprises instructions to register the speed dial number in the multi-functional device.

11. An apparatus for controlling a state of a multi-functional device using a short message service, the apparatus comprising:
a receiving unit for receiving a short message comprising instructions for changing the state of a multi-functional device; and
a control unit for controlling the state of the multi-functional device according to the instructions for changing the state of the multi-functional device included in the short message.

12. A multi-functional device having at least one of a printer function that prints data input from a host computer, a scanner function that reads image documents, a copier function that copies image documents input through scanning, and a fax function that transmits image documents to a remote location through a communication line, the device comprising:
a receiving unit for receiving a short message comprising instructions for changing the state of a multi-functional device; and
a control unit for controlling the state of the multi-functional device according to the instructions for changing the state of the multi-functional device included in the short message.

13. The apparatus of claim 11 or the multi-functional device of claim 12, further comprising:
a determination unit for determining whether the short message satisfies a requirement for changing the state of the multi-functional device, wherein the control unit is configured to control the state of the multi-functional device according to the instructions for changing the state of the multi-functional device when the determination unit determines that the short message satisfies the requirement.

14. The apparatus or multi-functional device of claim 13, wherein the determination unit is configured to determine whether a calling subscriber number corresponding to the short message is authorized to change the state of the multi-functional device and determine that the short message does not satisfy the requirement when the calling subscriber number is not authorized.

15. The apparatus or multi-functional device of claim 14, wherein a calling subscriber number that is authorized to change the state of the multi-functional device is input to and stored in the multi-functional device in advance.

16. The apparatus or multi-functional device of claim 13, wherein the determination unit is configured to determine whether the short message comprises a character and number for changing the state of the multi-functional device and determine that the short message does not satisfy the requirement when the short message does not comprise the character and number.

17. The apparatus or multi-functional device of claim 16, wherein the determination unit is configured to determine whether the short message begins with a special predetermined character for changing the state of the multi-functional device and further comprises a secret number, wherein the secret number can be input to and stored in the multi-functional device in advance.

18. The apparatus of claim 11 or the multi-functional device of claim 12, wherein the control unit is configured to control the power of the multi-functional device to be turned off when the short message comprises instructions to turn off the power.

19. The apparatus of claim 11 or the multi-functional device of claim 12, wherein the control unit is configured to control an answer mode of the multi-functional device to be converted into a fax mode when the short message comprises instructions to convert the answer mode of the multi-functional device into the fax mode.

20. The apparatus of claim 11 or the multi-functional device of claim 12, wherein the control unit is configured to control a fax forwarding function of the multi-functional device to be executed when the short message comprises instructions to execute the fax forwarding function of the multi-functional device.

21. The apparatus of claim 11 or the multi-functional device of claim 12, wherein the control unit is configured to control a speed dial number to be registered in the multi-functional device when the short message comprises instructions to register the speed dial number in the multi-functional device.

22. A method of controlling a multi-functional device, the method comprising:
receiving a short message including an instruction to change the state of the multi-functional device (100); and
changing the state of the device according to said instruction.

23. Apparatus for controlling a multi-functional device, the apparatus comprising:
means (10) for receiving a short message including an instruction; and
means (20, 30) for changing the state of the multi-functional device according to said instruction.

24. A multi-functional device including the apparatus according to claim 23.
